# EUROPÄISCHE PATENTSCHRIFT

(11) **EP 0 522 387 B1**
(45) Veröffentlichungstag und Bekanntmachung des Hinweises auf die Patenterteilung: **08.03.1995**
(21) Anmeldenummer: 92110909.6
(22) Anmeldetag: 27.06.1992
(51) Int. Cl.: B29C 61/06, F16B 2/20, H02G 15/18

(54) **Vorrichtung zum Abdichten des Endbereiches einer wärmegeschrumpften Manschette**
Device for sealing the end portion of a heat-shrinkable sleeve
Dispositif pour rendre étanche la partie terminale d'une manchette thermorétractable

(30) Priorität: 11.07.1991 DE 4122946
(43) Veröffentlichungstag der Anmeldung: 13.01.1993
(73) Patentinhaber: kabelmetal electro GmbH, 30002 Hannover (DE)
(72) Erfinder: Grajewski, Franz, Dr.-Ing., W-3060 Stadthagen (DE); Schöttker, Reinhard, W-3061 Lauenhagen (DE)

(56) Entgegenhaltungen:
- DE-A- 3 932 747
- DE-U- 9 100 979
- FR-A- 2 218 671

## Beschreibung

Die Erfindung betrifft eine Vorrichtung zum Abdichten des Endbereichs einer eine Abzweigverbindung von elektrischen oder optischen Kabeln umhüllenden wärmegeschrumpften Manschette, welche zwischen den abzweigenden Kabeln an der äußeren Oberfläche der Manschette angreift und die einander gegenüberliegenden Flächenbereiche der Manschette zwischen den Kabeln während der Abkühlung nach dem Schrumpferwärmen der Manschette in Berührung miteinander hält.

In einem Prospekt der Firma Raychem "Thermofit Tubing Splice Encapsulation Directions" wird eine Technik vorgestellt, bei der zwei Kabel von einem Ende in eine schrumpfbare Hülse eintreten. Die schrumpfbare Hülse weist an ihrer inneren Oberfläche eine Schicht aus einem Heißschmelzkleber auf. Der zwischen den beiden Kabeln befindliche Bereich der Hülse wird, während die Hülse heiß ist, mit einem zangenartigen Werkzeug zusammengehalten. Während des Schrumpfens wird der Heißschmelzkleber flüssig und wird durch die schrumpfende Hülse in Hohlräume gedrückt. Überschüssiger Heißschmelzkleber tritt am Ende der Hülse aus. Nach dem Erkalten der Abzweiganordnung kann das Werkzeug entfernt werden. Der erkaltete Heißschmelzkleber hält die einander gegenüberliegenden Bereich zwischen den Kabeln zusammen und dichtet den Eintrittsbereich ab. Wie das zangenartige Werkzeug ausgestaltet ist, wird nicht offenbart.

Aus der DE-C-29 00 518 ist es bekannt, anstelle des zangenartigen Werkzeuges eine Klammer vom Ende der Hülse her auf den Eintrittsbereich der Hülse zwischen den Kabeln zu schieben. In einer bevorzugten Ausführungsform wird eine Klammer mit drei Schenkeln verwendet, von denen einer innerhalb der Hülse und die beiden anderen außerhalb der Hülse befindlich sind. Der im Inneren der Hülse befindliche Schenkel trägt eine Beschichtung aus Heißschmelzkleber. Beim Schrumpferwarmen wird die Wärme über die metallische Klammer in das Innere der Hülse transportiert und bringt dort den Heißschmelzkleber zum Fließen. Diese Technik hat sich bei der Herstellung von Muffen für Nachrichtenkabel durchgesetzt. Das Aufstecken dieser bekannten Klammer ist dann besonders schwierig, wenn das Muffenende schlecht zugänglich ist. Außerdem benötigt der Monteur beide Hände, da es zum Aufstecken der Klammer erforderlich ist, daß der Eintrittsbereich zusammengedrückt wird. Um zu verhindern, daß die Klammer beim Schrumpferwärmen von der Hülse abspringt, müssen bestimmte Vorkehrungen getroffen werden, die die Herstellungskosten für die Klammer in die Höhe treiben. So ist es bekannt, die Klammer mit einem Sägezahnprofil zu versehen bzw. die Klammer aus einer wärmerückstellbaren Legierung herzustellen.

Aus dem DE-U-91 00 359 ist ein Werkzeug bekannt, mit welchem der zwischen den abzweigenden Kabeln befindliche Endbereich der Manschette vor, während oder nach dem Wärmeschrumpfen zusammengedrückt werden kann. Das Werkzeug ist nach Art einer Zange aus Metalldraht aufgebaut. Der Anpreßdruck wird durch eine Feder aufgebracht. Ebenso wie die eingangs erwähnte Klammer wird auch das Werkzeug nach dem DE-U-91 00 359 vom Ende der Manschette aufgebracht, d.h. es muß ein genügend großer Abstand zwischen den abzweigenden Kabeln vorhanden sein, um die Handhabung der Klammer bzw. des Werkzeuges möglich zu machen.

Ferner ist aus der DE-U-91 00 979 ein Werkzeug zum Abdichten einer eine Abzweigverbindung umhüllenden Manschette bekannt, welches aus Schenkel besteht, die auf gegenüberliegenden Seiten im Endbereich der Manschette aufliegen und mittels eines Federbügels miteinander verbunden sind, wodurch die Schenkel Druck auf die Manschette ausüben. Dieses Werkzeug kann seitlich auf die Manschette aufgebracht werden. Dieses Werkzeug ist sperrig und schwer handhabbar, da wegen des erforderlichen Anpreßdrucks ein Auseinanderspreizen einen relativ hohen Kraftaufwand erforderlich macht.

Der vorliegenden Erfindung liegt die Aufgabe zugrunde eine einfache Vorrichtung anzugeben, mit der der Endbereich einer wärmegeschrumpften Manschette, die eine Abzweigverbindung von Kabeln umhüllt, zwischen den abzweigenden Kabeln dauerhaft abgedichtet werden kann. Ein nennenswertes Auseinanderspreizen der abzweigenden Kabel soll nicht mehr erforderlich sein. Das Aufbringen der Vorrichtung soll auch unter beengten räumlichen Bedingungen einfach durchzuführen sein.

Diese Aufgabe wird bei einer Vorrichtung der eingangs erwähnten Art dadurch gelöst, daß zwei identische Formteile mit einem Fußteil und einem sich vom Fußteil in etwa halbkreisförmig erstreckenden Armteil vorhanden sind, wobei im Fußteil jedes Formteils zumindest ein Zapfen und eine Bohrung vorgesehen sind, mittels denen die Formteile zu der Vorrichtung derart zusammenfügbar sind, daß die Armteile eines der abzweigenden Kabel umgreifen und daß die freien Enden der Armteile an der Manschette zwischen den abzweigenden Kabeln angreifen. In der einfachsten Ausführungsform weisen die Formteile zumindest eine Bohrung im Fußteil vorzugsweise eine Sackbohrung auf. Die Verbindung der Formteile miteinander zu der Vorrichtung erfolgt dann durch einen gesonderten Zapfen, der in die Bohrungen der Formteile eingeführt wird.

Mit besonderem Vorteil weisen die Bohrungen und die Zapfen einen rechteckigen Querschnitt auf. Dadurch ist eine Führung der Formteile gegeneinander möglich und ein Verdrehen gegeneinander ausgeschlossen. Zweckmäßigerweise sind die rechteckförmigen Bohrungen lediglich durch drei Wandungen begrenzt. Dadurch sind die Bohrungen von der Seite her zugänglich, so daß wie es eine Weiterbildung der Erfindung vorsieht, in die Bohrung Hinterschneidungen eingebracht werden können, die mit entsprechenden Hinterschneidungen an den Zapfen zu einer Rastverbindung führen. Von Vorteil ist ferner, daß der Zapfen zumindest über einen Teil seiner Länge mindestens einen Längsschlitz aufweist, so daß nach dem Einführen des Zapfens in die Bohrung der Zapfen zurückfedern kann. Um die Steifigkeit des Armteils zu erhöhen, hat es sich als vorteilhaft herausgestellt, daß an der nach außen weisenden Oberfläche des Armteils eine Verstärkungsrippe vorgesehen ist. Die Formteile sind zweckmäßigerweise Spritzgußteile vorteilhafterweise Spritzgußteile aus Kunststoff. Durch Spritzgußtechnik lassen sich die Formteile kostengünstig in großen Stückzahlen herstellen. Als Werkstoffe haben sich Polyamid, Polyvinylchlorid, Polyethylen, Polypropylen aber auch Polycarbonat sowie Preßmassen auf Phenolharzbasis als geeignet erwiesen.

Die Erfindung ist anhand der in den Figuren 1 bis 3 schematisch dargestellten Ausführungsbeispiele näher erläutert.

Die Figuren zeigen:
Figur 1 eine Ansicht einer Abzweigverbindung von elektrischen Kabeln
Figur 2 eine Draufsicht auf die abzweigenden Kabel
Figur 3 eine Ansicht eines Formteils

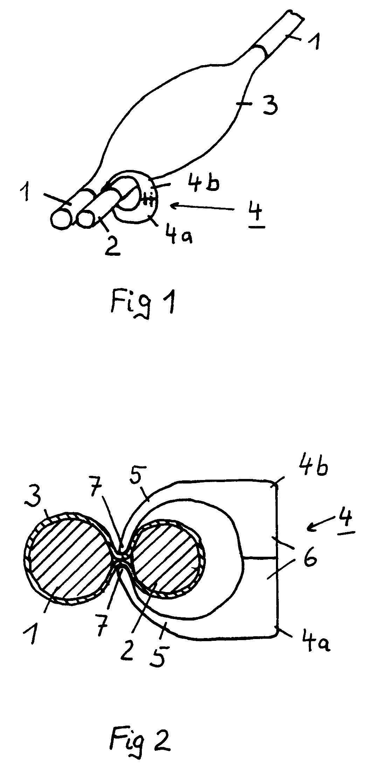

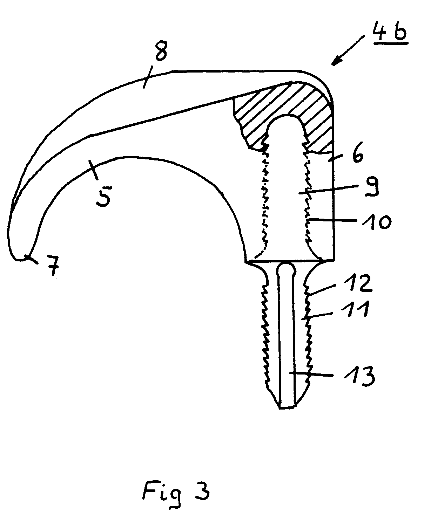

In der Figur 1 ist mit 1 ein elektrisches Kabel bezeichnet, von dem ein Kabel 2 abgezweigt ist. Die Abzweigstelle ist von einer wärmegeschrumpften Manschette 3 umhüllt, die in nicht dargestellter aber an sich bekannter Weise aus einem wärmeschrumpfbaren Kunststoffband durch Verschließen der Längskanten mit einer Schiene gebildet ist. Der Ein- bzw. Austrittsbereich der Manschette 3 zwischen den Kabeln 1 und 2 ist durch eine Vorrichtung 4 abgedichtet, welche durch Zusammenfügen der zwei Formteile 4a und 4b gebildet wird. Wie die Figur 2 verdeutlicht, übergreift die Vorrichtung 4 das Kabel 2 mit seinen Armteilen 5. Das Zusammenfügen der Formteile 4a und 4b erfolgt im Bereich der Fußteile 6, wie anhand der Figur 3 näher erläutert werden soll. Wenn die Formteile 4a und 4b zu der Vorrichtung 4 zusammengefügt sind, liegen die freien Enden 7 der Armteile 5 auf der äußeren Oberfläche der Manschette 3 auf und formen diese so, daß die gegenüberliegenden Oberflächen der Manschette 3 im geformten Bereich zwischen den Kabeln 1 und 2 in Berührung miteinander gelangen. Der Abstand der freien Enden 7 zueinander beträgt in etwa die zweifache Wanddicke der Manschette 3 im geschrumpften Zustand. Die Vorrichtung 4 kann vor, während oder nach dem Schrumpfen auf das Ende der Manschette 3 aufgesetzt werden, jedoch ist es wichtig, daß die Manschette 3 noch heiß ist, d.h. der an der inneren Oberfläche der Manschette 3 vorhandenen Heißschmelzkleber muß noch flüssig sein, damit alle Hohlräume ausgefüllt werden. Die Länge der freien Enden 7 in Längsrichtung der Kabel 1 bis 2 gesehen beträgt je nach Kabeldurchmesser 50 - 100 mm, die Länge des Fußteils beträgt in etwa 25 - 50 mm.

Das Formteil nach der Lehre der Erfindung ist in der Figur 3 dargestellt. Das Armteil ist hier durch eine Rippe 8 verstärkt, die sich vom Fußteil 6 bis zum freien Ende 7 des Armteils 5 erstreckt. Die Höhe der Rippe 8 steigt sowohl vom freien Ende 7 als auch vom Fußteil 6 an und erreicht ihre größte Höhe in etwa in der Mitte.

Im Fußteil 6 des Formteils (4a,4b) ist eine Bohrung 9 vorgesehen, die Hinterschneidungen 10 aufweist.

Neben der Bohrung 9 ragt aus dem Fußteil 6 ein Zapfen 11, dessen Abmessungen so ausgewählt sind, daß der Zapfen 11 des einen Formteils 4a in die Bohrung 9 des Formteils 4b eindringen kann und dort festgehalten wird. Hierzu weist der Zapfen 11 ebenfalls Hinterschneidungen 12 auf, die beim Zusammenfügen der Formteile 4a und 4b in die Hinterschneidungen 10 der Bohrung 9 einrasten. Zur Unterstützung dieses Mechanismus weist der Zapfen 11 einen Längsschlitz 13 auf.

Die Formteile 4a und 4b sind völlig identisch und sind als Spritzgußteile aus Kunststoff preiswert herstellbar.

Es besteht jedoch auch die Möglichkeit, die Formteile 4a bzw. 4b ohne die Zapfen 11 als Spritzgußteile herzustellen. In diesem Fall ist es sinnvoll, zwei Bohrungen 9 nebeneinander im Fußteil 6 vorzusehen und die in einem gesonderten Arbeitsgang hergestellten Zapfen 11 in die Bohrungen 9 nachträglich einzufügen.

## Patentansprüche

1. Vorrichtung zum Abdichten des Endbereiches einer eine Abzweigverbindung von elektrischen oder optischen Kabeln (1,2) umhüllenden wärmegeschrumpften Manschette (3), welche zwischen den abzweigenden Kabeln (1,2) an der äußeren Oberfläche der Manschette (3) angreift und die einander gegenüberliegenden Flächenbereiche der Manschette (3) zwischen den Kabeln (1,2) während der Abkühlung nach dem Schrumpferwärmen der Manschette (3) in Berührung miteinander hält, gekennzeichnet durch zwei identische Formteile (4a,4b) mit einem Fußteil (6) und einem sich vom Fußteil (6) in etwa halbkreisförmig erstreckenden Armteil (5), wobei im Fußteil (6) jedes Formteils (4a,4b) zumindest ein Zapfen (11) und eine Bohrung (9) vorgesehen sind, mittels denen die Formteile (4a,4b) zu der Vorrichtung (4) derart zusammenfügbar sind, daß die Armteile (5) eines der abzweigenden Kabel (2) umgreifen und daß die freien Enden (7) der Armteile (5) an der Manschette (3) zwischen den abzweigenden Kabeln (1,2) angreifen.

2. Vorrichtung nach Anspruch 1, dadurch gekennzeichnet, daß Zapfen (11) und Bohrung (9) einen rechteckigen Querschnitt aufweisen.

3. Vorrichtung nach Anspruch 2, dadurch gekennzeichnet, daß die rechteckförmigen Bohrungen (9) durch lediglich drei Wandungen begrenzt sind.

4. Vorrichtung nach einem der Ansprüche 1 bis 3, dadurch gekennzeichnet, daß die Bohrung (9) und die Zapfen (11) Hinterschneidungen (10,12) aufweisen, welche beim Zusammenstecken der Formteile (4a,4b) miteinander verrasten.

5. Vorrichtung nach einem der Ansprüche 1 bis 4, dadurch gekennzeichnet, daß der Zapfen (11) über seine gesamte Länge mindestens einen Schlitz (13) aufweist.

6. Vorrichtung nach einem der Ansprüche 1 bis 5, dadurch gekennzeichnet, daß an der nach außen weisenden Oberfläche des Armteils (5) eine Verstärkungsrippe (8) vorgesehen ist.

7. Vorrichtung nach einem der Ansprüche 1 bis 6, dadurch gekennzeichnet, daß die Formteile (4a,4b) Spritzgußteile vorzugsweise Kunststoffspritzgußteile sind.

## Claims

1. Device for sealing the end region of a heat-shrunk sleeve (3) which encases a junction connection of electrical or optical cables (1, 2), engages on the outer surface of the sleeve (3) between the branching cables (1, 2) and holds the mutually opposite surface regions of the sleeve (3) in contact with one another between the cables (1, 2) during cooling after the shrink-heating of the sleeve (3), characterized by two identical moulded parts (4a, 4b) having a foot part (6) and an arm part (5) which extends in an approximately semicylindrical shape from the foot part (6), at least one pin (11) and one hole (9) being provided in the foot part (6) of each moulded part (4a, 4b) by means of which pin and hole the moulded parts (4a, 4b) can be joined together to form the device (4) in such a manner that the arm parts (5) engage around one of the branching cables (2) and the free ends (7) of the arm parts (5) act on the sleeve (3) between the branching cables (1, 2).

2. Device according to Claim 1, characterized in that the pin (11) and hole (9) have a rectangular cross-section.

3. Device according to Claim 2, characterized in that the rectangular holes (9) are bounded by only three walls.

4. Device according to one of Claims 1 to 3, characterized in that the hole (9) and the pins (11) have undercuts (10, 12) which latch to one another when the moulded parts (4a, 4b) are plugged together.

5. Device according to one of Claims 1 to 4, characterized in that the pin (11) has at least one slot (13) over its entire length.

6. Device according to one of Claims 1 to 5, characterized in that a reinforcing rib (8) is provided on the outwardly pointing surface of the arm part (5).

7. Device according to one of Claims 1 to 6, characterized in that the moulded parts (4a, 4b) are injection-moulded parts, preferably plastic injection-moulded parts.

## Revendications

1. Dispositif pour rendre étanche la zone d'extrémité d'une manchette (3), rétractée à chaud, entourant une liaison de bifurcation de câbles électriques ou optiques (1, 2), dispositif qui intervient sur la surface extérieure de la manchette (3) entre les câbles qui bifurquent (1, 2) et qui, pendant le refroidissement après le chauffage de la manchette (3) pour rétraction, maintient en contact l'une avec l'autre les zones de surface de la manchette (3) situées en face l'une de l'autre, caractérisé par deux pièces de forme identiques (4a,4b) présentant une partie formant pied (6) et une partie formant bras (5) qui s'étend à peu près en forme de demicercle à partir de la partie formant pied (6), étant précisé que dans la partie formant pied (6) de chaque pièce de forme (4a,4b) sont prévus au moins un tenon (11) et un perçage (9) au moyen desquels les pièces de forme (4a,4b) peuvent s'assembler, pour donner le dispositif (4), de façon telle que les parties formant bras (5) enserrent l'un des câbles en bifurcation (2) et que les extrémités libres (7) des parties formant bras (5) interviennent sur la manchette (3) entre les câbles en bifurcation (1, 2).

2. Dispositif selon la revendication 1, caractérisé par le fait que tenon (11) et perçage (9) présentent une section rectangulaire.

3. Dispositif selon revendication 2, caractérisé par le fait que les perçages rectangulaires (9) sont limités par simplement trois parois.

4. Dispositif selon l'une des revendications 1 à 3, caractérisé par le fait que le perçage (9) et les tenons (11) présentent des dents en contre-dépouille (10, 12) qui se crantent les unes avec les autres lors de l'enfichage des pièces de forme (4a,4b) pour assemblage.

5. Dispositif selon l'une des revendications 1 à 4, caractérisé par le fait que le tenon (11) présente sur toute sa longueur au moins une fente (13).

6. Dispositif selon l'une des revendications 1 à 5, caractérisé par le fait qu'à la surface orientée vers l'extérieur de la partie formant bras (5) est prévue d'une nervure de renfort (8).

7. Dispositif selon l'une des revendications 1 à 6, caractérisé par le fait que les pièces de forme (4a,4b) sont des pièces moulées par injection, de préférence des pièces en plastique moulées par injection.
